# DEMANDE DE BREVET EUROPEEN

(11) **EP 1 513 032 A1**
(43) Date de publication de la demande: **09.03.2005**
(21) Numéro de dépôt: 03019951.7
(22) Date de dépôt: 02.09.2003
(51) Int. Cl.: G04G 1/00, H01Q 1/27, G06K 19/077

(54) **Objet à carcasse métallique comprenant un module électronique pour la mémorisation d'informations, et module électronique pour un tel objet**

(71) Demandeur: The Swatch Group Management Services AG, 2501 Biel (CH)
(72) Inventeur: Vuilleumier, Jean-Claude, 2088 Cressier (CH); Apothéloz, David, 2035 Corcelles (CH); Müller, Jacques, 2732 Reconvilier (CH); Meyrat, Clément, 2525 Le Landeron (CH)
(74) Mandataire: Ravenel, Thierry Gérard Louis

(57) **Abrégé**

L'objet à carcasse métallique, tel qu'une montre-bracelet, comprend un module électronique (14) pour la mémorisation d'informations qui est monté dans une cavité extérieure (13) du fond d'un boîtier (3). Ce module peut communiquer par des signaux radio-diffusés avec un appareil de lecture et/ou d'écriture (35) desdites informations. Le module comprend un socle (15) sur lequel sont montés une puce de circuit intégré (24) présentant au moins deux bornes de connexion (26) et une bobine (23) servant d'antenne d'émission et/ou de réception. Cette bobine est constituée par un fil électriquement conducteur ayant deux extrémités (29) reliées respectivement aux dites bornes de connexion de ladite puce de circuit intégré. La bobine entoure un espace dans lequel est placée ladite puce. Le socle du module électronique (14) sous forme de cuvette est un élément métallique conducteur de flux magnétique pour isoler magnétiquement la bobine du module de la carcasse métallique lors d'une communication d'informations entre un appareil de lecture et/ou d'écriture et ledit module. Le socle (15) du module (14) peut être recouvert par un couvercle de protection (28).

## Description

La présente invention concerne un objet à carcasse métallique comprenant un module électronique pour la mémorisation d'informations. Ledit module électronique est monté sur une surface extérieure de l'objet et peut communiquer par des signaux radio-diffusés avec un appareil de lecture et/ou d'écriture desdites informations. Ce module comprend un socle sur lequel sont montés une puce de circuit intégré présentant au moins deux bornes de connexion et une bobine servant d'antenne d'émission et/ou de réception. La bobine est constituée par un fil électriquement conducteur ayant deux extrémités reliées respectivement aux dites bornes de connexion de ladite puce de circuit intégré. Cette bobine entoure un espace dans lequel est placée ladite puce,

L'objet peut être par exemple une machine de travail, un meuble, un véhicule, un outil, un instrument de mesure, un téléphone mobile, une montre, un bracelet métallique ou divers autres appareils qui comprennent une carcasse métallique. De préférence, cet objet portable peut être une montre-bracelet.

L'invention concerne également le module électronique formé de telle manière à pouvoir être positionné sur une surface extérieure de l'objet à carcasse métallique, qui est prévue à cet effet.

Par carcasse métallique, on comprend au moins une pièce ou portion métallique de l'objet ou plus généralement sa structure de base.

Dans le cas d'une montre-bracelet, des modules électroniques, par exemple pour la mémorisation d'informations sont généralement placés à l'intérieur du boîtier de montre. Ces modules électroniques comprennent une puce de circuit intégré reliée à une bobine servant d'antenne pour communiquer par des signaux radio-diffusés avec un appareil de lecture et/ou d'écriture. Cet appareil de lecture et/ou d'écriture peut être prévu pour au moins lire les informations contenues dans une mémoire de la puce de circuit intégré ou pour supprimer ou modifier au moins une partie de ces informations et en ajouter d'autres.

Plus précisément, l'invention se rapporte à un objet à carcasse métallique comprenant un module électronique de type passif. Le terme "passif" signifie que ce module n'est pas muni d'une propre source d'énergie, telle qu'une pile ou un accumulateur, pour pouvoir fonctionner. L'énergie électrique de ce module est fournie par les signaux radio-diffusés de l'appareil de lecture et/ou d'écriture avec lequel il coopère.

De telles montres sont prévues par exemple pour simplement mémoriser un code d'accès à des locaux privés ou protégés ou à des pistes de ski. D'autres montres avec des modules électroniques équipés de puces de circuits intégrés plus compliqués peuvent contenir des données personnelles, telles que les dossiers médicaux de leurs propriétaires.

Dans certaines montres connues, le module électronique est placé dans une lunette creuse, de préférence amovible, pour pouvoir changer le module si nécessaire. Une telle solution ne peut donc pas convenir à des montres ayant n'importe quel type de boîtier. De plus, si le boîtier comporte effectivement une lunette ou une carrure-lunette, cela complique la fabrication de cette dernière et augmente par conséquent le prix de revient de la montre.

Dans d'autres montres, le module est placé dans un espace prévu entre l'arrière du mouvement de ces montres et le fond de leur boîtier, ce qui augmente forcément leur volume. D'autre part, si le fond du boîtier est en un matériau qui n'est pas amagnétique, par exemple en acier, le flux magnétique engendré ou reçu par la bobine du module électronique subit des pertes importantes. Même si des mesures sont prises pour limiter ces pertes, celles-ci sont loin d'être négligeables. Ceci réduit la distance de communication entre un appareil de lecture et/ou d'écriture et le module électronique. Enfin, même si le fond du boîtier est en matériau amagnétique, par exemple en matière plastique, en or, argent ou aluminium, les signaux radio-diffusés émis et reçus par la bobine du module qui doivent traverser toute l'épaisseur de ce fond subissent une atténuation importante.

L'invention a donc pour but principal de pallier les inconvénients de l'art antérieur en fournissant un objet à carcasse métallique comprenant un module électronique agencé pour atténuer des perturbations dues à la carcasse métallique de l'objet lors d'une communication avec un appareil de lecture et/ou d'écriture d'informations. De plus, le module de l'objet est agencé pour augmenter la distance de lecture et/ou d'écriture lors d'une communication avec ledit appareil.

A cet effet, l'invention concerne un objet à carcasse métallique comprenant un module électronique pour la mémorisation d'informations cité ci-devant qui se caractérise en ce que le socle du module électronique est un élément métallique conducteur de flux magnétique pour isoler magnétiquement la bobine du module de la carcasse métallique lors d'une communication d'informations entre un appareil de lecture et/ou d'écriture et ledit module.

De préférence, l'objet à carcasse métallique est une montre-bracelet dont le boîtier métallique représente la carcasse métallique. De ce fait, il est nécessaire que le socle métallique soit en un matériau à forte perméabilité de manière à servir de blindage magnétique pour la bobine dudit module. La partie du socle, sur laquelle sont montés la puce et la bobine, doit de préférence être positionnée entre la surface extérieure de l'objet recevant le module et la bobine. De cette manière, une meilleure atténuation des perturbations dues au boîtier métallique lors d'une communication avec un appareil de lecture et/ou d'écriture d'informations est obtenue.

De préférence, le socle forme une cuvette à fond plat dans laquelle est montée la bobine et la puce de circuit intégré. La hauteur de la paroi latérale de ladite cuvette comptée depuis la surface intérieure du fond plat étant supérieure à l'épaisseur de la bobine et de la puce de manière que la bobine et la puce de circuit intégré ne dépasse pas le bord supérieur de ladite cuvette. De cette façon, un meilleur blindage magnétique est obtenu ce qui permet d'augmenter la distance de lecture et/ou d'écriture entre un appareil de lecture et/ou d'écriture et ledit module.

Une cavité extérieure ou trou borgne peut être réalisé sur une surface extérieure de l'objet pour loger en majeure partie ledit module. De préférence, cette cavité est de forme complémentaire au socle dudit module. Si le socle a une forme de cuvette, cette cuvette est introduite dans ladite cavité de manière que le fond de cette cuvette vienne en contact direct avec le fond de ladite cavité. Ceci permet de bien isoler magnétiquement la bobine dudit module de la carcasse métallique.

Le socle peut également être une simple plaque sur laquelle sont fixées la bobine de forme annulaire et la puce de circuit intégré logée à l'intérieur de ladite bobine. De la résine pour encapsuler la puce de circuit intégré peut être mise dans l'espace laissé libre à l'intérieur de la bobine. La plaque du module est positionnée entre le fond de la cavité et la bobine.

De préférence, un couvercle de protection est placé sur ledit socle pour enfermer la bobine et la puce de circuit intégré à l'aide dudit socle. Ce couvercle peut être réalisé dans un matériau neutre comme du plastique ou de la céramique. Dans ce cas, uniquement une partie du couvercle fait saillie en dehors de la cavité après avoir introduit ledit module dans ladite cavité.

Ainsi, contrairement à un objet, tel qu'une montre, dans lequel le module est placé à l'intérieur de celui-ci, les signaux émis et reçus par la bobine du module de l'objet selon l'invention n'ont qu'à traverser le couvercle de protection du module dont l'épaisseur est bien inférieure à celle du fond d'un boîtier de montre par exemple.

Dans le cas d'un objet, tel qu'une montre, il est possible d'utiliser une montre existante, et de former dans son fond, notamment par fraisage, un trou borgne ou cavité extérieure de forme adaptée à celle du module électronique. De ce fait, le module peut être monté avantageusement dans la cavité après toutes les étapes de fabrication de la montre-bracelet.

De préférence, la cavité et le module ont une forme essentiellement cylindrique et sont situés au centre du fond du boîtier.

Grâce au socle du module électronique, ce module peut être placé sur toute surface extérieure de l'objet, que cette surface soit d'un matériau métallique ou isolant. Ce module est ainsi relativement bien isolé magnétiquement lorsqu'il est monté sur une carcasse en acier, en aluminium, en argent ou en un autre matériau magnétique.

L'invention a également pour but de pallier les inconvénients de l'art antérieur en fournissant un module électronique pour un objet à carcasse métallique. Ce module est agencé pour atténuer des perturbations dues à une carcasse métallique de l'objet sur lequel il peut être monté lors d'une communication avec un appareil de lecture et/ou d'écriture d'informations.

A cet effet, l'invention concerne un module électronique cité ci-devant qui se caractérise en ce que le socle est un élément métallique conducteur de flux magnétique pour servir de blindage magnétique.

Les buts, avantages et caractéristiques de l'objet à carcasse métallique, ainsi que le module électronique monté sur l'objet apparaîtront mieux dans la description suivante de formes d'exécution non limitatives de l'invention en liaison avec les dessins dans lesquels :
La figure 1 représente une coupe diamétrale schématique d'un objet, tel qu'une montre-bracelet à affichage analogique, avec un module électronique selon l'invention,
les figures 2a et 2b représentent une vue en coupe diamétrale agrandie de la zone du fond du boîtier de la figure 1 dans laquelle se trouve incorporé un module électronique selon une première forme d'exécution, et une vue de dessous incomplète du module électronique sans couvercle de protection,
la figure 3 est une vue en coupe diamétrale agrandie de la zone du fond du boîtier de la figure 1 dans laquelle se trouve incorporé un module électronique selon une deuxième forme d'exécution,
la figure 4 est une vue en coupe diamétrale agrandie de la zone du fond du boîtier de la figure 1 dans laquelle se trouve incorporé un module électronique selon une troisième forme d'exécution,
la figure 5 est une vue en coupe diamétrale agrandie de la zone du fond du boîtier de la figure 1 dans laquelle se trouve incorporé un module électronique selon une quatrième forme d'exécution, et
les figures 6a et 6b représentent une vue de dessus et une vue de côté d'une barrette comprenant plusieurs cuvettes de blindage magnétique dans chacune desquelles sont montés une bobine et une puce de circuit intégré pour permettre l'automatisation de l'assemblage des modules électroniques.

Bien que l'invention ne soit évidemment pas limitée à une application horlogère, la description suivante sera faite cependant en référence à une montre-bracelet équipée d'un module électronique pour mémoriser des informations. Les informations mémorisées ou à mémoriser concernent la montre elle-même, et/ou des données personnelles du porteur de ladite montre. Le module électronique est destiné à être placé à une très faible distance (quelques millimètres au plus) de la bobine qui constitue l'antenne d'émission et/ou de réception d'un appareil de lecture et/ou d'écriture avec lequel il est amené à communiquer.

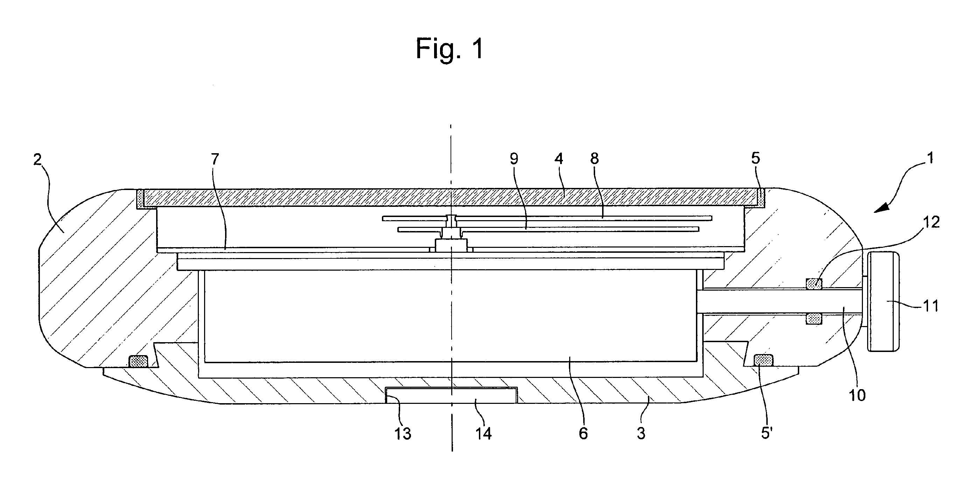

La montre-bracelet, en tant qu'objet à carcasse métallique, est représentée schématiquement à la figure 1. Elle comprend un boîtier désigné par la référence générale 1 qui représente en partie une carcasse métallique. Ce boîtier 1 comprend une carrure-lunette métallique 2, un fond 3 également métallique et une glace 4. La glace est fixée de façon classique sur la carrure-lunette 2 par serrage au moyen d'une garniture 5 qui sert en même temps à assurer l'étanchéité du boîtier au niveau de cette glace.

Comme représenté sur la figure 1, le fond 3 est fixé à la carrure-lunette 2 par encliquetage mais il pourrait tout aussi bien l'être par exemple par vissage ou par un système à baïonnette, de façon à comprimer une garniture 5' qui assure l'étanchéité du boîtier au niveau de ce fond.

Enfin, le boîtier 1 comprend également un système d'attache d'un bracelet qui n'est pas visible sur la figure 1 et qui peut être constitué par deux paires de cornes que présente la carrure-lunette 2.

Dans le boîtier 1 de montre est logé un mouvement 6 qui entraîne une aiguille de minutes 8 et une aiguille d'heures 9 placées devant un cadran 7 et qui comprend une tige de commande 10 qui traverse la carrure-lunette 2 et se termine par une couronne 11, l'étanchéité du boîtier 1 à l'endroit du passage de cette tige à travers la carrure-lunette étant assurée par un joint annulaire 12. Si la montre n'est pas de type électromécanique ou à remontage automatique, la tige 10 et la couronne 11 servent également à remonter cette montre.

Bien entendu, l'objet à carcasse métallique peut être également une montre-bracelet à circuit garde-temps et à affichage numérique de l'heure.

Conformément à l'invention, le fond 3 du boîtier 1 présente une cavité 13 qui est ouverte vers l'extérieur du boîtier et dans laquelle est logé en partie un module électronique 14. Cette cavité peut par exemple être réalisée simplement par fraisage.

Etant donné que, d'une part, dans l'application envisagée ici, le module électronique 14 a une surface nettement inférieure à celle du fond du boîtier et que, d'autre part, ce module peut être réalisé sous différentes formes, il est seulement représenté sur la figure 1 par un rectangle. Ce module peut avoir une épaisseur de l'ordre de 1 mm et un diamètre de l'ordre de 6 mm.

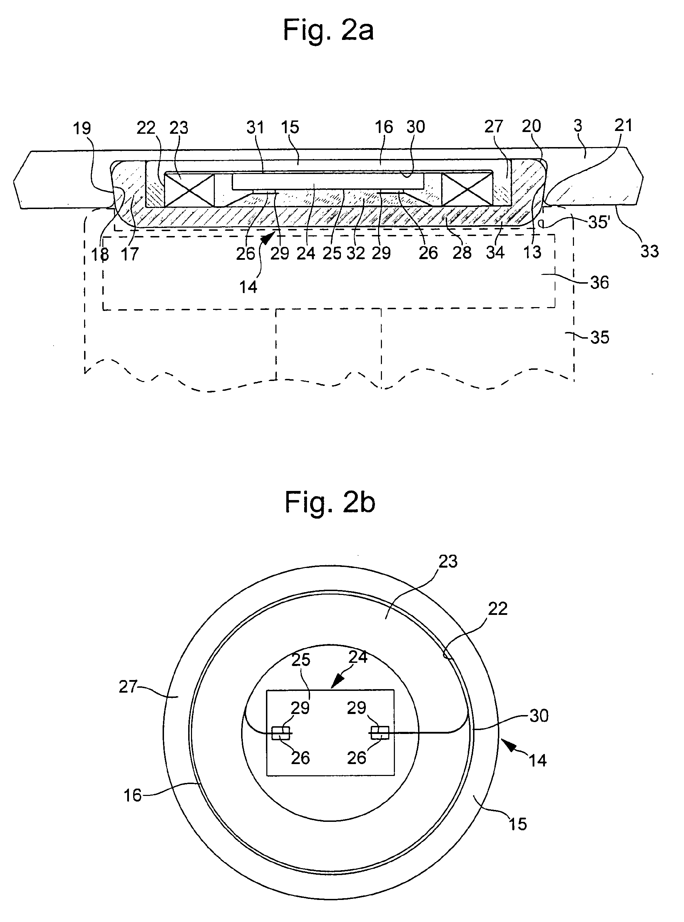

La figure 2a est une vue en coupe agrandie de la zone du fond 3 du boîtier 1 de la figure 1 qui montre une première forme d'exécution du module électronique 14 qui peut être inséré de façon durable dans la cavité 13 de ce fond.

Dans cette forme d'exécution, le module 14 comprend principalement un socle 15 sur lequel sont montés une bobine 23 servant d'antenne pour la communication d'informations et une puce de circuit intégré 24 reliée à la bobine. Le socle est un élément métallique conducteur de flux magnétique pour isoler magnétiquement

la bobine 23 du module lorsqu'il est logé dans la cavité 13 du fond 3 du boîtier métallique. Ce socle 15 est en forme de cuvette et présente un fond plat 16 et une paroi latérale essentiellement cylindrique 27 pour entourer sur deux côtés la bobine. Le socle en forme de cuvette est monté dans ladite cavité de manière que le fond plat 16 soit disposé entre le fond de la cavité 13 et la bobine 23 montée sur ledit socle. Le fond 16 du socle peut venir en contact du fond de la cavité 13.

Un couvercle de protection 28, qui comprend un fond et une paroi latérale circulaire 17, est prévu pour recouvrir le socle 15 afin d'enfermer la bobine 23 et la puce de circuit intégré 24 fixés sur le fond 16 du socle 15. Le socle peut être fixé dans le couvercle notamment par collage ou maintenu mécaniquement par friction entre la surface intérieure de la paroi 17 du couvercle et la surface extérieure de la paroi 27 du socle. Lorsque le module électronique est logé dans ladite cavité 13, une partie de la base du couvercle 28 est légèrement en saillie par rapport à la face externe 33 du fond 3 du boîtier 1.

Le matériau constituant le couvercle de protection 28 peut être par exemple une matière plastique comme le polyéthylène à haute densité ou une céramique ou du saphir. La matière plastique est plutôt réservée aux montres de bas de gamme et de gamme moyenne, alors que la céramique ou le saphir est réservé aux montres de haut de gamme. Si le matériau est de la céramique, cette dernière est de préférence choisie de façon à avoir sensiblement la même couleur et le même aspect que le métal qui constitue le fond du boîtier sauf si un effet esthétique particulier est recherché.

Comme représenté à la figure 2a, l'épaisseur de la paroi 17 du couvercle 28 augmente légèrement et de façon continue depuis sa base jusqu'à son sommet. Ainsi, la surface extérieure 18 de la paroi 17 présente une forme particulière qui lui permet de coopérer avec la paroi interne 19 de la cavité 13 qui a une forme complémentaire pour constituer un moyen d'assemblage du type queue d'aigle ou queue d'aronde.

De plus, le bord externe 20 de la paroi 17 du couvercle et le bord 21 de la paroi 19 de la cavité 13 sont arrondis pour faciliter l'introduction du module 14 dans cette cavité.

La figure 2b est une vue de dessous du module électronique 14 de la figure 2a en l'absence d'une matière adhésive de remplissage dont il sera question par la suite et du couvercle de protection.

En se reportant aux figures 2a et 2b, on peut voir que la paroi latérale 27 du socle 15 présente une surface interne 22 vraiment cylindrique, qui entoure une bobine annulaire, plus précisément cylindrique, plate et autoporteuse 23. Cette bobine est constituée de manière connue de plusieurs couches de spires jointives et coaxiales non visibles sur le dessin, réalisées au moyen d'un fil métallique très fin, de préférence en cuivre. Le fil de la bobine est entouré d'une gaine ou matière isolante et thermo-adhérente qui fond partiellement par chauffage. De cette manière, toutes les parties de cette gaine qui entourent les spires du fil se soudent entre elles lorsqu'on laisse ensuite la bobine se refroidir.

La bobine 23 entoure elle-même une puce de circuit intégré 24, en forme de parallélépipède rectangle et plus petite qu'elle. La puce de circuit intégré 24 présente sur sa face avant 25 deux bornes de connexion ou "bumps" (en terminologie anglaise) 26 sur lesquels sont soudées ou fixées par thermo-compression ou au moyen d'un adhésif conducteur les deux extrémités 29 du fil métallique de la bobine 23.

Comme représenté sur les figures 2a et 2b, les deux bornes de connexion 26 de la puce 24 sont disposées à l'opposé l'une de l'autre dans le sens de la longueur de la puce 24. Toutefois, il est bien clair qu'elles pourraient être placées autrement sur la face avant de cette puce, par exemple côte à côte dans le sens de sa largeur.

Dans cette première forme d'exécution, la bobine 23 et la puce 24 sont fixées directement sur la face interne 30 du fond plat 16 du socle 15 au moyen d'une mince couche de matériau adhésif 31. L'espace laissé libre par la puce à l'intérieur de la bobine est rempli d'une matière adhésive, isolante et thermodurcissable 32, par exemple une résine époxyde. Ceci permet de protéger les extrémités 29 du fil de la bobine 23 et leurs moyens de fixation sur les bornes de connexion 26 tant que le couvercle de protection 28 du module 14 ne les recouvre pas. De plus, la matière adhésive 32 est de préférence opaque pour protéger également la puce contre la lumière avant cette incorporation.

Comme le fond 3 du boîtier 1 est réalisé en un matériau magnétique, par exemple en acier, ou en aluminium, le socle 15 sert de blindage magnétique entre le fond du boîtier de montre et la bobine. De cette façon, les pertes de flux magnétique du module électronique sont fortement atténuées lorsque la bobine émet ou reçoit des signaux radio-diffusés respectivement vers et d'un appareil de lecture et/ou d'écriture avec lequel elle peut être couplée. De plus, grâce au matériau choisi du socle selon l'invention, la distance maximale pour la lecture et l'écriture d'informations est plus élevée qu'avec un socle isolant. Cette distance peut être supérieure à 8 mm même si le module est placé dans une cavité d'un boîtier métallique. Cette distance dépend également de l'émetteur et de son antenne.

Comme le montre la figure 2a, le module 14 est légèrement en saillie par rapport à la face externe 33 du fond 3 du boîtier 1 pour former un bossage 34 prévu pour positionner au mieux et rapidement une tête 35 d'un appareil de lecture et/ou d'écriture. La tête de cet appareil est représentée partiellement et schématiquement à l'aide de traitillés sur la figure 2a. Cette tête, qui comprend également une bobine 36 servant d'antenne, présente un évidement 35' de forme et de dimensions correspondant à celle du bossage 34. La tête peut être reliée par l'intermédiaire d'une interface à un appareil conçu pour communiquer avec la mémoire du module de la montre. L'appareil peut être un ordinateur personnel (PC) fixe ou portable.

Evidemment, le bossage 34 du module permettrait de placer de la même façon la montre sur un support qui présenterait un évidement correspondant à la forme et aux dimensions de ce bossage.

De plus, lorsque le module est en saillie par rapport au fond du boîtier 1, son arête externe est de préférence arrondie pour éviter que le porteur de la montre soit incommodé par le bossage 34. Toutefois, il peut être prévu uniquement un chanfrein en lieu et place de la partie arrondie.

Les ondes radio-diffusées émises et reçues par la bobine 23 du module 14 n'ont plus à traverser toute l'épaisseur du fond métallique 3 du boîtier 1 de la montre mais seulement celle du fond du couvercle 28 du module qui est beaucoup plus faible. Ainsi, ces ondes seront beaucoup moins atténuées et déformées que dans le cas des montres connues dans lesquelles le module électronique est placé au fond mais à l'intérieur du boîtier.

Comme il est nécessaire d'avoir un matériau à forte perméabilité afin de servir de blindage magnétique, le matériau utilisé pour le socle peut être composé de ferrite, ou d'un alliage de nickel, de fer, de cuivre et de molybdène. De préférence, l'alliage est composé de 70 à 80 % de nickel et de 10 à 20 % de fer. Il peut être utilisé un matériau connu sous la marque Mumétal®.

Le matériau du socle peut être également composé de fer doux pur par exemple connu sous la marque Sulem®.

Avec ces types de matériaux utilisés pour le socle, il est possible d'augmenter la distance séparant l'appareil de lecture et/ou d'écriture du module pour les opérations de lecture et/ou d'écriture d'informations de la mémoire de la puce de circuit intégré.

Dans le tableau ci-dessous, il est représenté des distances maximales entre un appareil de lecture et/ou d'écriture et un module électronique (TAG) pour la lecture et/ou l'écriture d'informations en fonction du matériau du boîtier de montre et du matériau composant le socle.

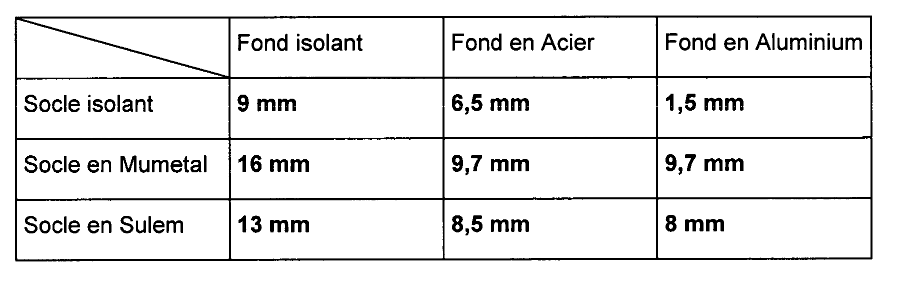

On remarque dans le tableau ci-dessus qu'avec un socle réalisé dans un matériau métallique à forte perméabilité, la distance maximale pour la lecture et l'écriture d'informations est supérieure à 8 mm quel que soit le fond sur lequel est placé le module électronique. Si la montre est placée dans une boîte d'emballage, cela permet de pouvoir ainsi lire ou écrire des informations à travers ladite boîte.

La puce de circuit intégré 24 peut comprendre un ou plusieurs types de mémoire pour stocker des informations. Il peut s'agir par exemple d'une mémoire pour stocker des informations qui ne peuvent être que lues ou d'une mémoire pour stocker d'autres informations qui peuvent en plus être supprimées et/ou modifiées ou encore complétées par des informations supplémentaires.

C'est le cas dans l'exemple d'application prévu précédemment où le module électronique permet de mémoriser des informations qui concernent la montre elle-même, plus précisément ses origines, son acquéreur et, comme pour une voiture, son "livret d'entretien" qui permettent de la personnaliser. Ceci peut être un argument de vente et ainsi faciliter les interventions d'un horloger lorsque la montre lui est confiée pour un contrôle, une réparation ou un simple changement de pile si la montre est du type électromécanique ou électronique.

Pour des montres de moyen ou haut de gamme, les informations mémorisées dans le module électronique peuvent être divisées par exemple en quatre catégories. Une première catégorie concerne la marque ou modèle de la montre vendue, ainsi qu'une date et une adresse d'expédition de cette montre chez un détaillant. Une seconde catégorie concerne l'usine de fabrication notamment du mouvement de montre. Une troisième catégorie concerne les références du point de vente. Finalement, une quatrième catégorie concerne des services clients relatifs par exemple aux diverses interventions effectuées sur la montre par le vendeur ou le détaillant.

Parmi ces informations certaines peuvent être stockées dans une mémoire de type ROM afin de pouvoir seulement être lues. C'est le cas par exemple pour les première et seconde catégories susmentionnées.

Les informations des deux autres catégories peuvent être stockées dans une ou plusieurs mémoires dynamiques de type RAM, EPROM ou EEPROM afin de pouvoir éventuellement être effacées, modifiées ou complétées.

Dans tous les cas, la bobine d'une tête de lecture ou d'un support peut être reliée par l'intermédiaire d'une interface adéquate à un ordinateur fixe ou portable qui permet de lire les informations contenues dans la ou les mémoires du module et si possible de supprimer, de modifier et de compléter certaines d'entre elles.

De là, ces informations peuvent être diffusées sur un site protégé d'Internet ou sur une boucle Intranet auxquels peuvent avoir accès toutes les personnes concernées par la montre.

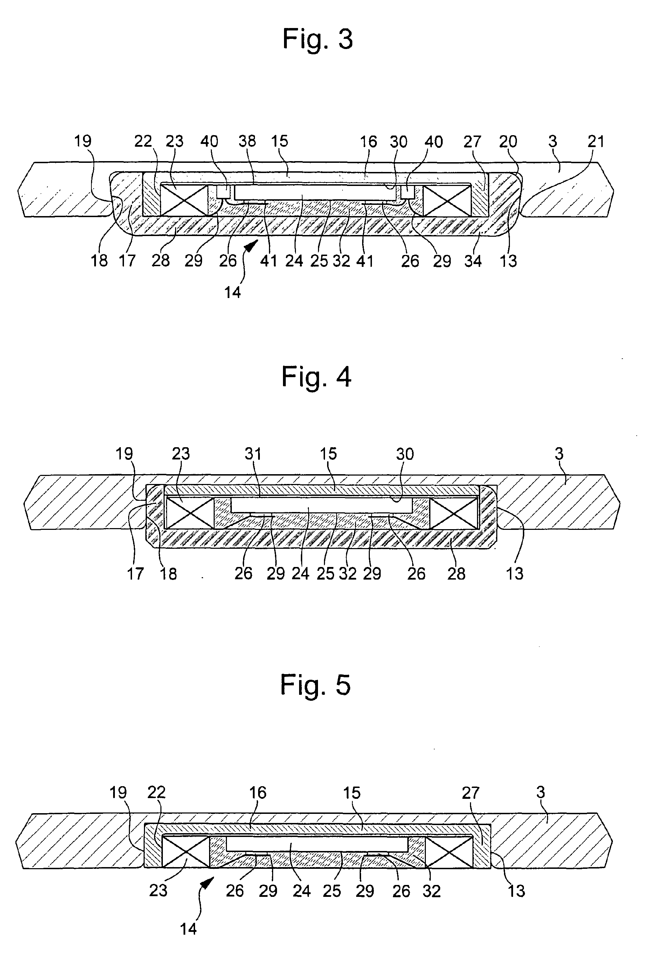

La figure 3 est une vue analogue à celle de la figure 2a qui montre une deuxième forme d'exécution du module électronique d'un objet, tel qu'une montre selon l'invention. Sur cette figure, les mêmes éléments sont désignés par les mêmes références et seules les parties nouvelles sont indiquées par de nouvelles références.

Une des différences de cette deuxième forme d'exécution par rapport à celle présentée à la figure 2a est que la bobine 23 et le circuit 24 ne sont plus collés directement sur la face interne 30 du fond 16 du socle 15 mais sur le substrat d'un circuit imprimé 38. Ce substrat peut être également collé sur le fond 16 du socle 15 du module 14 ou simplement chassé à l'intérieur de ce socle.

L'autre différence est due au fait que les extrémités du fil 29 de la bobine 23 ne relient plus directement cette bobine aux bornes 26 de la puce de circuit intégré 25 mais par l'intermédiaire de plots de connexion 40 formés sur le substrat du circuit imprimé 38. Plus précisément, chaque extrémité du fil 29 est soudée ou fixée par thermo-compression ou collée au moyen d'un adhésif électriquement conducteur sur l'un des plots 40 et ce dernier est à son tour relié à une borne de connexion 26 de la puce de circuit intégré 24 par un fil conducteur 41.

Grâce à cela la bobine 23 et la puce de circuit intégré 24 peuvent être connectées électriquement en utilisant la méthode classique et automatisée du "wire bonding" en terminologie anglaise.

Dans la troisième forme d'exécution représentée en coupe sur la figure 4, la surface extérieure 18 de la paroi latérale 17 du couvercle 28 ainsi que la paroi interne 19 de la cavité 13 du fond 3 du boîtier de montre sont toutes les deux cylindriques. Le module 14 est fixé à l'intérieur de la cavité par chassage ou par collage. De plus, le bord externe de la paroi 17 du couvercle 28 n'est plus arrondi comme dans la première forme d'exécution des figures 2a et 2b mais avec un chanfrein.

Dans cette troisième forme d'exécution, le socle métallique 15 est une plaque rigide, qui porte la bobine 23 et la puce de circuit intégré 24. Ce socle est inséré dans le couvercle 28 afin d'enfermer ladite bobine et ladite puce. Comme pour les précédentes formes d'exécution décrites ci-dessus, le socle est positionné entre la bobine et le fond de la cavité 13 pour le blindage magnétique de la bobine. Cependant, le socle 15 ne couvre qu'une surface de la bobine et est donc moins performant qu'un socle en forme de cuvette décrit ci-devant. Cette plaque rigide 15 peut avoir un diamètre extérieur légèrement supérieur à celui de la bobine 23.

Cette forme d'exécution est mieux adaptée lorsque le fond 3 du boîtier et/ou le couvercle 28 du module 14 sont constitués par des matériaux durs qui sont difficiles à usiner ou à mettre en forme.

D'autre part, dans cette troisième forme d'exécution comme dans celle des figures 2a et 2b, les extrémités 29 du fil de la bobine 23 sont directement fixées sur les bornes de connexion 26 de la puce de circuit intégré 24, mais il est bien évident que ces extrémités du fil et ces bornes 26 pourraient être reliées de la même façon que dans la forme d'exécution de la figure 3.

A noter que dans une autre forme d'exécution qui n'est pas représentée sur le dessin, le module 14 pourrait être fixé dans la cavité 13 du fond 3 du boîtier par sertissage. Le couvercle 28 du module présenterait alors du côté de son fond une entaille périphérique externe dans laquelle s'engagerait un rebord interne du fond 3. Cette méthode de fixation du module pourrait être utilisée par exemple lorsque le collage et le chassage ne seraient pas possibles.

Dans la quatrième forme d'exécution du module électronique, représentée à la figure 5, le socle métallique en forme de cuvette 15 pour le blindage magnétique, comme représenté sur les figures 2a et 3, n'est pas recouvert d'un couvercle de protection. La protection dudit module contre des dommages mécaniques n'est assurée que par la résine d'encapsulation 32 de la puce de circuit intégré 24 et la propre isolation des fils de la bobine 23. Cependant à la différence des précédentes formes d'exécution, aucune partie dudit module 14 introduit dans ladite cavité 13 de forme complémentaire au socle 15 n'est en saillie à l'extérieur de ladite cavité 13. Le module 14 peut être chassé ou collé dans la cavité 13 du fond du boîtier.

Pour cette quatrième forme d'exécution, la remarque faite précédemment à propos de la connexion entre les extrémités du fil de la bobine et les bornes de la puce de circuit intégré est également valable.

Toutefois, au lieu de relier les extrémités du fil de la bobine aux bornes de la puce de circuit intégré comme décrit ci-devant, cette liaison pourrait être obtenue en utilisant une méthode de liaison automatisée bien connue sous l'abréviation TAB (Tape Automatic Bonding) qui est décrite dans le brevet européen No 0 376 062. Cette méthode peut aussi être appliquée pour des modules équipant des objets à carcasse métallique, telles que des montres-bracelets.

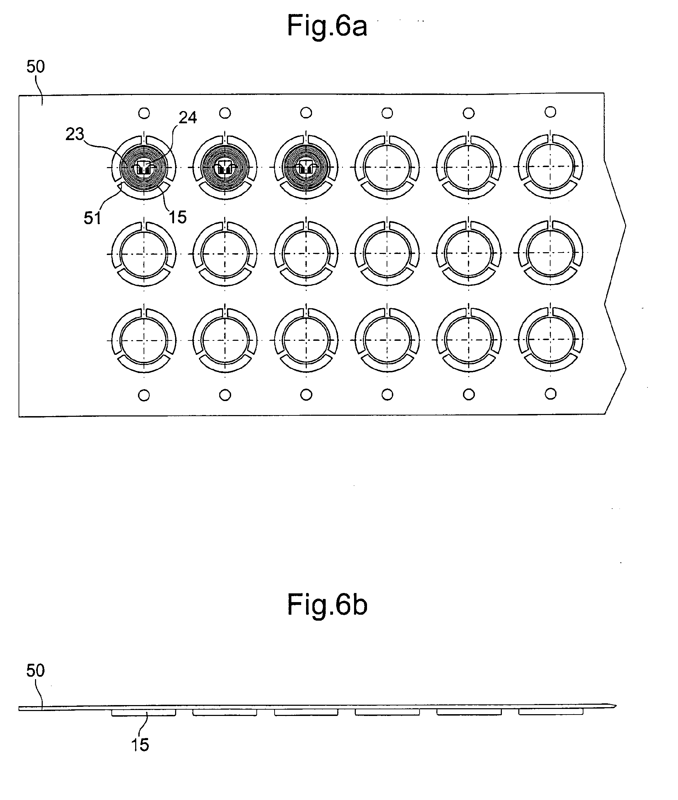

Les figures 6a et 6b représentent uniquement une barrette 50 d'un alliage métallique qui peut être facilement usiné ou étampé de manière à pouvoir automatiser l'assemblage des composants du module électronique. Cette barrette 50 peut être par exemple en fer doux pur ou en alliage de la marque Mumetal®. Avec ce type de matériau métallique, il est aisé de réalisé plusieurs socles 15 sous forme de cuvette dans la barrette. Chaque socle est maintenu au reste de la barrette par exemple par trois ponts 51.

Dans des étapes de fabrication de modules électroniques, une bobine 23 et une puce de circuit intégré 24 sont fixées dans chaque cuvette 15. Par la suite, des fils de connexion relient les bornes de contact de la puce de circuit intégré aux extrémités de la bobine. De la résine est ensuite appliquée sur la puce pour combler également l'espace libre entre la bobine et la puce de circuit intégré. Une fois que tous les modules électroniques sont terminés dans la barrette 50, ils peuvent être successivement séparés de la barrette. Chaque socle peut être ensuite recouvert par un couvercle de protection avant l'introduction dudit module dans une cavité du fond du boîtier d'une montre. Il est bien clair que toutes ces opérations peuvent être automatisées, ce qui permet de gagner du temps en production de ces montres à module électronique.

A partir de la description qui vient d'être faite de multiples variantes de réalisation de l'objet à carcasse métallique ou du module électronique peuvent être conçues par l'homme du métier sans sortir du cadre de l'invention définie par les revendications. Le module électronique peut être intégralement logé dans une cavité extérieure de l'objet sans aucune partie en saillie. De plus, dans ces formes et variantes d'exécution, le module électronique est fixé à demeure dans la cavité. Cependant, il serait tout à fait possible de concevoir un module avec un couvercle de protection du socle métallique, qui est muni d'une paroi latérale afin de lui permettre de coopérer avec une paroi interne de la cavité de façon à rendre ce module amovible et éventuellement interchangeable. Ce module peut être par exemple vissé ou fixé par un système à baïonnette.

La bobine et la puce de circuit intégré peuvent être fixés dans le couvercle de protection avant d'être montés sur le socle métallique.

La bobine peut être d'une autre forme qu'un anneau circulaire. Elle peut être réalisée sous forme rectangulaire, ou décrivant une portion de boucle autour de la puce de circuit intégré.

Le socle peut comprendre une fente diamétrale afin d'éviter d'éventuelles perturbations par courant de Foucault.

## Revendications

1. Objet à carcasse métallique comprenant un module électronique (14) pour la mémorisation d'informations qui est monté sur une surface extérieure de l'objet, ledit module pouvant communiquer par des signaux radio-diffusés avec un appareil de lecture et/ou d'écriture (35) desdites informations, ledit module comprenant un socle (15) sur lequel sont montés une puce de circuit intégré (24) présentant au moins deux bornes de connexion (26) et une bobine (23) servant d'antenne d'émission et/ou de réception, ladite bobine étant constituée par un fil électriquement conducteur ayant deux extrémités (29) reliées respectivement aux dites bornes de connexion de ladite puce de circuit intégré, cette bobine entourant un espace dans lequel est placée ladite puce, **caractérisé en ce que** le socle du module électronique (14) est un élément métallique conducteur de flux magnétique pour isoler magnétiquement la bobine du module de la carcasse métallique lors d'une communication d'informations entre un appareil de lecture et/ou d'écriture et ledit module.

2. Objet selon la revendication 1, **caractérisé en ce que** le socle du module est réalisé en fer pur ou en un matériau comprenant un alliage de nickel, de fer, de cuivre et de molybdène.

3. Objet selon la revendication 2, **caractérisé en ce que** l'alliage du socle du module est composé notamment de 70 à 80 % de nickel et de 10 à 20 % de fer.

4. Objet selon la revendication 1, **caractérisé en ce que** le module est logé au moins en majeure partie dans une cavité (13) ouverte vers l'extérieur que présente une surface extérieure de l'objet portable, ladite cavité étant de forme complémentaire audit module.

5. Objet selon la revendication 4, en tant que montre-bracelet dont le boîtier (1) constitue la carcasse métallique de l'objet, **caractérisé en ce que** ladite cavité (13) et ledit module (14) ont une forme essentiellement cylindrique et sont situés sensiblement au centre du fond (3) dudit boîtier (1).

6. Objet selon l'une des revendications 1 à 4, **caractérisé en ce que** ledit socle (15) est en forme de cuvette qui présente un fond plat (16) sur lequel sont fixées ladite bobine (23) de forme annulaire et ladite puce de circuit intégré (24) et une paroi latérale (27) entourant ladite bobine, la hauteur de la paroi latérale comptée depuis la surface intérieure du fond plat étant supérieure ou égale à l'épaisseur de la bobine ou de la puce, et **en ce que** le socle est logé dans une cavité (13) d'une surface extérieure de l'objet entre la surface intérieure de la cavité et la bobine.

7. Objet selon la revendication 4, **caractérisé en ce que** le module électronique comprend un couvercle de protection (28) ayant une base et une paroi latérale circulaire (17), ledit couvercle étant placé sur ledit socle pour enfermer la bobine et la puce de circuit intégré à l'aide dudit socle (15), **en ce que** ledit couvercle est en matière plastique, en céramique ou en saphir, et **en ce que** la paroi latérale (17) du couvercle est fixée en majeure partie dans ladite cavité, la base dudit couvercle étant en partie en saillie à l'extérieur de ladite cavité.

8. Objet selon la revendication 7, **caractérisé en ce que** l'épaisseur de ladite paroi latérale (17) du couvercle augmente légèrement et de façon continue depuis sa base jusqu'à son sommet pour avoir une surface extérieure (18) pouvant coopérer avec une paroi interne (19) de forme complémentaire de ladite cavité (13) afin de constituer un moyen d'assemblage de type queue d'aronde entre ledit module électronique (14) et la cavité de la surface de l'objet.

9. Objet selon la revendication 7, **caractérisé en ce que** ladite paroi latérale (17) du couvercle (28) présente une surface extérieure (18) cylindrique et ladite cavité (13) une paroi interne (19) également cylindrique.

10. Objet selon la revendication 7, **caractérisé en ce que** ledit module (14) est fixé par chassage dudit couvercle de protection (28) dans ladite cavité (13) ou par collage dans ladite cavité (13) ou par sertissage dans ladite cavité (13).

11. Objet selon l'une des revendications 1 à 5 et 7, **caractérisé en ce que** ledit socle (15) est constitué par une plaque rigide sensiblement circulaire sur laquelle sont fixées ladite bobine (23) de forme annulaire et ladite puce de circuit intégré (24), ledit socle étant positionné entre la surface extérieure de l'objet et la bobine.

12. Objet selon la revendication 1, **caractérisé en ce que** ladite bobine (23) et ladite puce de circuit intégré (24) sont fixées directement par collage sur ledit socle (15), et **en ce que** lesdites extrémités (29) du fil de la bobine sont également fixées directement sur lesdites bornes (26) de la puce de circuit intégré au moyen d'un matériau électriquement conducteur.

13. Objet selon la revendication 1, **caractérisé en ce que** ladite bobine (23) et ladite puce de circuit intégré (24) sont fixées sur le substrat d'un circuit imprimé (38), et **en ce que** ledit circuit imprimé présente deux plots de connexion (40) situés entre ladite bobine et ladite puce, sur lesquels sont fixées lesdites extrémités (29) du fil de ladite bobine et deux extrémités de deux fils conducteurs (41) dont les autres extrémités sont fixées sur lesdites bornes de connexion (26) de ladite puce.

14. Objet selon la revendication 4 en tant que montre-bracelet, **caractérisé en ce que** ledit module (14) présente une partie en saillie à l'extérieur du fond (3) dudit boîtier (1) prévu pour positionner rapidement et avec précision une tête (35) de forme complémentaire d'un appareil de lecture et/ou d'écriture.

15. Module électronique (14) pour un objet selon l'une des revendications précédentes, le module comprenant un socle (15) sur lequel sont montés une puce de circuit intégré (24) présentant au moins deux bornes de connexion (26) et une bobine (23) servant d'antenne d'émission et/ou de réception, ladite bobine étant constituée par un fil électriquement conducteur ayant deux extrémités (29) reliées respectivement aux dites bornes de connexion de ladite puce de circuit intégré, cette bobine entourant un espace dans lequel est placée ladite puce, **caractérisé en ce que** le socle est un élément métallique conducteur de flux magnétique pour servir de blindage magnétique.

16. Module selon la revendication 15, **caractérisé en ce qu'**il comprend un couvercle de protection (28) placé sur ledit socle pour enfermer la bobine et la puce de circuit intégré à l'aide dudit socle (15), ledit couvercle étant en matière plastique, en céramique ou en saphir.
